# EUROPÄISCHE PATENTSCHRIFT

(11) **EP 0 931 386 B1**
(45) Veröffentlichungstag und Bekanntmachung des Hinweises auf die Patenterteilung: **05.07.2000**
(21) Anmeldenummer: 98916947.9
(22) Anmeldetag: 13.03.1998
(51) Int. Cl.: H04B 1/66

(54) **VERFAHREN ZUM SIGNALISIEREN EINER RAUSCHSUBSTITUTION BEIM CODIEREN EINES AUDIOSIGNALS**
METHOD FOR SIGNALLING A NOISE SUBSTITUTION DURING AUDIO SIGNAL CODING
PROCEDE DE SIGNALISATION D'UNE SUBSTITUTION DE BRUIT LORS DU CODAGE D'UN SIGNAL AUDIO

(30) Priorität: 14.07.1997 DE 19730129
(43) Veröffentlichungstag der Anmeldung: 28.07.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: HERRE, Jürgen, D-91054 Buckenhof (DE); GBUR, Uwe, 10827- Berlin (DE); EHRET, Andreas, 90429 Nürnberg (DE); DIETZ, Martin, D-90408 Nürnberg (DE); TEICHMANN, Bodo, D-90427 Nürnberg (DE); KUNZ, Oliver, D-96145 Sesslach (DE); BRANDENBURG, Karlheinz, D-91054 Erlangen (DE); GERHÄUSER, Heinz, D-91344 Waischenfeld (DE)
(74) Vertreter: Schoppe, Fritz, Dipl.-Ing.
(86) Internationale Anmeldenummer: EP9801480
(87) Internationale Veröffentlichungsnummer: WO9904505

(56) Entgegenhaltungen:
- EP-A- 0 714 173
- SCHULZ D: "Improving audio codecs by noise substitution" JOURNAL OF THE AUDIO ENGINEERING SOCIETY, JULY-AUG. 1996, AUDIO ENG. SOC, USA, Bd. 44, Nr. 7-8, ISSN 0004-7554, Seiten 593-598, XP000733647 in der Anmeldung erwähnt
- BOSI M ET AL: "ISO/IEC MPEG-2 advanced audio coding" JOURNAL OF THE AUDIO ENGINEERING SOCIETY, OCT. 1997, AUDIO ENG. SOC, USA, Bd. 45, Nr. 10, ISSN 0004-7554, Seiten 789-812, XP000730161 in der Anmeldung erwähnt
- SOUTHCOTT C B ET AL: "VOICE CONTROL OF THE PAN-EUROPEAN DIGITAL MOBILE RADIO SYSTEM" COMMUNICATIONS TECHNOLOGY FOR THE 1990'S AND BEYOND, DALLAS, NOV. 27 - 30, 1989, Bd. VOL. 2, Nr. -, 27.November 1989, INSTITUTE OF ELECTRICAL AND ELECTRONICS ENGINEERS, Seiten 1070-1074, XP000091191

## Beschreibung

Die vorliegende Erfindung bezieht sich auf Audiocodierverfahren und insbesondere auf Audiocodierverfahren nach dem Standard ISO/MPEG, wie z. B. MPEG-1, MPEG-2, MPEG-2 AAC, zur datenreduzierten Darstellung von hochqualitativen Audiosignalen.

Der Standardisierungskörper ISO/IEC JTC1/SC29/WG11, der auch als die Moving Pictures Expert Group (MPEG) bekannt ist, wurde 1988 gegründet, um digitale Video- und Audiocodierungsschemen für niedrige Datenraten zu spezifizieren. Im November 1992 wurde die erste Spezifikationsphase durch den Standard MPEG-1 vollendet. Das Audiocodiersystem nach MPEG-1, das in ISO 11172-3 spezifiziert ist, arbeitet in einem Einkanal- oder Zweikanalstereo-Modus bei Abtastfrequenzen von 32 kHz, 44,1 kHz und 48 kHz. Der Standard MPEG-1 Layer II liefert Rundfunkqualität, wie sie durch die International Telecommunication Union spezifiziert ist, bei einer Datenrate von 128 kb/s pro Kanal.

In seiner zweiten Entwicklungsphase bestanden die Ziele von MPEG darin, eine Mehrkanalerweiterung für MPEG-1-Audio zu definieren, die zur existierenden MPEG-1-Systemen rückwärtskompatibel sein sollte, und ebenfalls einen Audiocodierstandard bei niedrigeren Abtastfrequenzen (16 kHz, 22,5 kHz, 24 kHz) als bei MPEG-1 zu definieren. Der rückwärtskompatible Standard (MPEG-2 BC) sowie der Standard mit niedrigeren Abtastfrequenzen (MPEG-2 LSF) wurden im November 1994 vollendet. MPEG-2 BC liefert eine gute Audioqualität bei Datenraten von 640 - 896 kb/s für 5 Kanäle mit voller Bandbreite. Seit 1994 besteht eine weitere Anstrengung des MPEG-2-Audiostandardisierungskommittees darin, einen Multikanalstandard mit höherer Qualität zu definieren, als sie erreichbar ist, wenn eine Rückwärtskompatibilität zur MPEG-1 gefordert wird. Dieser nicht-rückwärtskompatible Audiostandard gemäß MPEG-2 wird als MPEG-2 NBC bezeichnet. Das Ziel dieser Entwicklung besteht darin, Rundfunkqualitäten gemäß den ITU-R-Anforderungen bei Datenraten von 384 kb/s oder darunter für 5-kanalige Audiosignale, bei denen jeder Kanal die volle Bandbreite hat, zu erreichen. Der Audiocodierstandard MPEG-2 NBC wurde April 1997 vollendet. Das Schema MPEG-2 NBC wird den Kern für den bereits geplanten Audiostandard MPEG-4 bilden, welcher höhere Datenraten haben wird (über 40 kb/s pro Kanal). Der NBC oder nicht rückwärts kompatible Standard kombiniert den Codierwirkungsgrad einer hochauflösenden Filterbank, von Prädiktionstechniken und der redundanzreduzierenden Huffman-Codierung, um eine Audiocodierung mit Rundfunkqualität bei sehr niedrigen Datenraten zu erreichen. Der Standard MPEG-2 NBC wird auch als MPEG-2 NBC AAC (AAC = Advanced Audio Coding) bezeichnet. Eine detaillierte Darstellung des technischen Inhalts von MPEG-2 AAC findet sich in M. Bosi, K. Brandenburg, S. Quackenbush, L. Fielder, K. Akagiri, H. Fuchs, M. Dietz, J. Herre, G. Davidson, Yoshiaki Oikawa: "ISO/IEC MPEG-2 Advanced Audio Coding", 101st AES Convention, Los Angeles 1996, Preprint 4382.

Effiziente Audiocodierverfahren entfernen sowohl Redundanzen als auch Irrelevanzen von Audiosignalen. Korrelationen zwischen Audioabtastwerten und Statistiken der Abtastwertdarstellung werden ausgenutzt, um Redundanzen zu entfernen. Frequenzbereichs- und Zeitbereichsmaskierungseigenschaften des menschlichen Gehörsystems werden ausgenutzt, um nichtwahrnehmbare Signalanteile (Irrelevanzen) zu entfernen. Der Frequenzgehalt des Audiosignals wird mittels einer Filterbank in Teilbänder unterteilt. Die Datenratenreduktion wird erreicht, indem das Spektrum des Zeitsignals gemäß psychoakustischen Modellen quantisiert wird, und dieselbe kann ein verlustloses Codierverfahren umfassen.

Allgemein gesagt wird ein zeitkontinuierliches Audiosignal abgetastet, um ein zeitdiskretes Audiosignal zu erhalten. Das zeitdiskrete Audiosignal wird mittels einer Fensterfunktion gefenstert, um aufeinanderfolgende Blöcke oder Frames mit einer bestimmten Anzahl, z. B. 1024, gefensterter zeitdiskreten Abtastwerten zu erhalten. Nacheinander wird jeder Block von gefensterten zeitdiskreten Abtastwerten des Audiosignals in den Frequenzbereich transformiert, wobei beispielsweise eine modifizierte diskrete Cosinustransformation (MDCT) verwendet werden kann. Die somit erhaltenen Spektralwerte sind noch nicht quantisiert und müssen demnach quantisiert werden. Das Hauptziel dabei besteht darin, die Spektraldaten derart zu quantisieren, daß das Quantisierungsrauschen durch die quantisierten Signale selbst maskiert oder verdeckt wird. Dazu wird ein im MPEG-AAC-Standard beschriebenes psychoakustisches Modell herangezogen, das unter Berücksichtigung der speziellen Eigenschaften des menschlichen Gehörs abhängig von dem vorliegenden Audiosignal Maskierungsschwellen berechnet. Die Spektralwerte werden nun derart quantisiert, daß das eingeführte Quantisierungsrauschen versteckt und somit unhörbar wird. Das Quantisieren führt also zu keinem hörbaren Rauschen.

In dem NBC-Standard wird ein sog. ungleichförmiger Quantisierer verwendet. Zusätzlich wird ein Verfahren verwendet, um das Quantisierungsrauschen zu formen. Das NBC-Verfahren verwendet wie auch vohergegenene Standards die einzelne Verstärkung von Gruppen von Spektralkoeffizienten, welche als Skalenfaktorbänder bekannt sind. Um so effizient wie möglich zu arbeiten, ist es wünschenswert, in der Lage zu sein, das Quantisierungsrauschen in Einheiten zu formen, die an die Frequenzgruppen des menschlichen Gehörsystems möglichst angelehnt sind. Es ist somit möglich, Spektralwerte zu gruppieren, welche die Bandbreite der Frequenzgruppen sehr eng wiedergeben. Einzelne Skalenfaktorbänder können mittels Skalenfaktoren in Stufen von 1,5 dB verstärkt werden. Die Rauschformung wird erreicht, da verstärkte Koeffizienten größere Amplituden haben. Daher werden sie im allgemeinen ein höheres Signal/Rausch-Verhältnis nach der Quantisierung zeigen. Andererseits benötigen größere Amplituden mehr Bits zur Codierung, d. h. die Bitverteilung zwischen den Skalenfaktorbändern wird implizit verändert. Selbstverständlich muß die Verstärkung durch die Skalenfaktoren im Decodierer korrigiert werden. Aus diesem Grund müssen die Verstärkungsinformationen, die in den Skalenfaktoren in Einheiten von 1,5 dB-Schritten gespeichert sind, als Seiteninformationen zu dem Decodierer übertragen werden.

Nach der Quantisierung der in Skalenfaktorbändern vorliegenden ggf. durch Skalenfaktoren verstärkten Spektralwerte sollen dieselben codiert werden. Das Eingangssignal in ein rauschloses Codiermodul ist somit der Satz von beispielsweise 1024 quantisierten Spektralkoeffizienten. Durch das rauschlose Codiermodul werden die Sätze von 1024 quantisierten Spektralkoeffizienten in Abschnitte oder "Sections" eingeteilt, derart, daß eine einzige Huffman-Codiertabelle ("Codebook") verwendet wird, um jeden Abschnitt zu codieren. Aus Codiereffizienzgründen können Abschnittsgrenzen nur an Skalenfaktorbandgrenzen vorhanden sein, derart, daß für jeden Abschnitt oder "Section" des Spektrums sowohl die Länge des Abschnitts in Skalenfaktorbändern als auch die Huffman-Codiertabellennummer, die für den Abschnitt verwendet wird, als Seiteninformationen übertragen werden müssen.

Das Bilden der Abschnitte ist dynamisch und variiert typischerweise von Block zu Block, derart, daß die Anzahl von Bits, die benötigt werden, um den vollen Satz von quantisierten Spektralkoeffizienten darzustellen, minimiert wird. Die Huffman-Codierung wird verwendet, um n-Tupel von quantisierten Koeffizienten darzustellen, wobei der Huffman-Code von einem von 12 Codiertabellen abgeleitet wird. Der maximale absolute Wert der quantisierten Koeffizienten, der von jeder Huffman-Codiertabelle dargestellt werden kann, und die Anzahl von Koeffizienten in jedem n-Tupel für jede Codiertabelle sind a priori festgelegt.

Der Sinn des Bildens der Abschnitte oder Sections besteht also darin, Bereiche mit gleicher Signalstatistik zu gruppieren, um mittels einer einzigen Huffman-Codiertabelle für eine Section einen möglichst hohen Codiergewinn zu erreichen, wobei der Codiergewinn allgemein durch den Quotienten aus Bits vor der Codierung und Bits nach der Codierung definiert ist. Mittels einer Codiertabellennummer ("Codebooknumber"), die in der für das NBC-Verfahren verwendeten Bitstromsyntax festgelegt ist, wird auf eine der 12 Huffman-Codiertabellen verwiesen, welche für einen speziellen Abschnitt den höchsten Codiergewinn ermöglicht. Der Ausdruck "Codiertabellennummer" soll in dieser Anmeldung somit den Platz in der Bitstromsyntax bezeichnen, der für die Codiertabellennummer reserviert ist. Um 11 verschiedene Codiertabellennummern binär zu codieren, werden 4 Bit benötigt. Diese 4 Bit müssen für jeden Abschnitt, d. h. für jede Gruppe von Spektralwerten, als Seiteninformationen übertragen werden, damit der Decodierer zum Decodieren die entsprechende korrekte Codiertabelle auswählen kann.

Eine weitere Technik, die neuerdings Beachtung findet, ist die "Rauschsubstitution", deren Aspekte ausführlich in Donald Schulz: "Improving Audio Codecs by Noise Substitution", Journal of the Audio Eng. Soc., Bd. 44, Nr. 7/8, S. 593 - 598, Juli/August 1996, beschrieben sind. Wie bereits erwähnt wurde, verwenden herkömmliche Audiocodieralgorithmen üblicherweise Maskierungseffekte des menschlichen Ohrs, um die Datenrate oder die Anzahl von zu übertragenden Bits entscheidend zu reduzieren. Maskierung bedeutet also, daß eine oder mehrere Frequenzkomponenten als Spektralwerte andere Komponenten mit niedrigeren Pegeln unhörbar machen. Dieser Effekt kann auf zwei Arten und Weisen ausgenutzt werden. Zuerst müssen Audiosignalkomponenten, die durch andere Komponenten maskiert werden, nicht codiert werden. Zweitens ist das Einführen von Rauschen durch die eben beschriebene Quantisierung erlaubt, wenn dieses Rauschen durch Komponenten des ursprünglichen Signals verdeckt wird.

Bei rauschhaften Signalen ist das menschliche Gehörsystem nicht in der Lage, den exakten Zeitverlauf eines solchen Signals zu erfassen. Bei üblichen Algorithmen führte dies dazu, daß sogar die Wellenform des weißen Rauschens, welche für das menschliche Gehör nahezu irrelevant ist, codiert wurde. Ein gehörrichtiges Codieren von rauschhaltigen Signalen erfordert daher hohe Bitraten für Informationen, die nicht hörbar sind, wenn keine speziellen Vorkehrungen getroffen werden. Falls jedoch rauschhaltige Komponenten von Signalen erfaßt und mit Informationen über ihre Rauschpegel, über ihren Frequenzbereich oder über ihren zeitlichen Ausdehnungsbereich codiert werden, kann eine solche überflüssige Codierung verringert werden, was zu außerordentlich großen Biteinsparungen führen kann. Diese Tatsache wird durch die Psychoakustik untermauert, die besagt, daß der Wahrnehmungseindruck von Rauschsignalen primär von deren spektraler Zusammensetzung und nicht von der tatsächlichen Wellenform bestimmt wird. Dies ermöglicht also die Benutzung der Rauschsubstitutionstechnik bei der Datenreduktion von Audiosignalen.

Der Codierer steht daher vor der Aufgabe, in dem gesamten Spektrum des Audiosignals rauschartige oder rauschhafte Spektralwerte zu finden bzw. zu erkennen. Eine Definition für rauschhafte Spektralwerte lautet wie folgt: Wenn eine Signalkomponente durch ihren Pegel, durch ihren Frequenzbereich und durch ihren zeitlichen Ausdehnungsbereich derart charakterisiert werden kann, daß sie ohne hörbare Unterschiede für das menschliche Gehörsystem durch ein Rauschersetzungsverfahren rekonstruiert werden kann, wird diese Signalkomponente als Rauschen klassifiziert. Die Erfassung dieser Charakteristik kann entweder im Frequenzbereich oder im Zeitbereich durchgeführt werden, wie es in der zuletzt zitierten Veröffentlichung dargestellt ist. Das einfachste Verfahren besteht beispielsweise darin, tonale, d. h. nicht rauschhafte, Komponenten zu erfassen, indem eine Zeit-Frequenz-Transformation verwendet wird, und indem stationäre Spitzen in zeitlich aufeinanderfolgenden Spektren verfolgt werden. Diese Spitzen werden als tonal bezeichnet, alles andere wird als rauschhaft bezeichnet. Dies stellt jedoch eine relativ grobe Rauscherfassung dar. Eine weitere Möglichkeit, zwischen rauschhaften und tonalen Spektralkomponenten zu unterscheiden, besteht in der Verwendung eines Prädiktors für Spektralwerte in aufeinanderfolgenden Blöcken. Dabei wird eine Prädiktion von einem Spektrum zu dem folgenden Spektrum, d. h. dem Spektrum, das dem nächsten zeitlichen Block oder Frame zugeordnet ist, durchgeführt. Unterscheidet sich ein prädizierter Spektralwert von einem tatsächlich durch Transformation ermittelten Spektralwert des nächsten zeitlichen Blocks oder Frames nicht oder nur wenig, so wird davon ausgegangen, daß es sich bei diesem Spektralwert um eine tonale Spektralkomponente handelt. Daraus kann ein Tonalitätsmaßabgeleitet werden, dessen Wert einer Entscheidung zugrundeliegt, um tonale und rauschhafte Spektralwerte voneinander zu unterscheiden. Dieses Erfassungsverfahren ist jedoch lediglich für streng stationäre Signale geeignet. Es versagt dabei, Situationen zu erfassen, bei denen Sinussignale mit gering veränderten Frequenzen über der Zeit vorhanden sind. Solche Signale erscheinen oft in Audiosignalen, wie z. B. Vibratos, und es ist für den Fachmann offensichtlich, daß diese nicht durch eine rauschhafte Komponente ersetzt werden können.

Eine weitere Möglichkeit zur Erfassung von rauschhaften Signalen besteht in der Rauscherfassung durch Prädiktion im Zeitbereich. Hierfür eignet sich ein angepaßtes Filter als Prädiktor, welcher wiederholt angewendet werden kann, um eine lineare Prädiktion durchzuführen, wie es in der Technik hinreichend bekannt ist. Vergangene Audiosignale werden eingespeist und das Ausgangssignal wird mit dem tatsächlichen Audioabtastwert verglichen. Im Fall eines kleinen Prädiktionsfehlers kann Tonalität angenommen werden. Um den Charakter unterschiedlicher Frequenzregionen zu bestimmen, d. h. um den Spektralbereich zu erfassen, ob eine Gruppe von Spektralwerten eine rauschhafte Gruppe ist, müssen Zeit-Frequenz-Transformationen sowohl des ursprünglichen als auch des prädizierten Signals durchgeführt werden. Dann kann für jede Frequenzgruppe ein Tonalitätsmaß berechnet werden, indem die ursprünglichen und die prädizierten Werte miteinander verglichen werden. Ein Hauptproblem dabei ist der begrenzte dynamische Bereich des Prädiktors. Eine rauschhafte Frequenzgruppe mit einem hohen Pegel dominiert den Prädiktor aufgrund des resultierenden großen Fehlers. Andere Frequenzregionen mit tonalen Komponenten könnten als rauschhaft interpretiert werden. Dieses Problem kann durch Verwendung eines iterativen Algorithmus verringert werden, bei dem das Fehlersignal normalerweise einen geringeren Pegel als das Ursprungssignal hat und wieder durch einen weiteren Prädiktor eingespeist wird, wonach beide prädizierten Signale addiert werden. Weitere Verfahren sind in der Veröffentlichung von Schulz ausgeführt.

Die nun als rauschhaft klassifizierte Gruppe von Spektralwerten wird nicht wie üblich quantisiert und Entropie- bzw. Redundanz-codiert (mittels beispielsweise einer Huffman-Tabelle) zum Empfänger übertragen. Stattdessen wird nur eine Kennung zur Anzeige der Rauschsubstitution sowie ein Maß für die Energie der rauschhaften Gruppe von Spektralwerten als Seiteninformationen übertragen. Im Empfänger werden dann für die substituierten Koeffizienten Zufallswerte (Rauschen) mit der übertragenen Energie eingesetzt. Die rauschhaften Spektralwerte werden also durch Zufallsspektralwerte mit entsprechendem Energiemaß substituiert.

Durch die Übertragung einer einzigen Energieinformation anstelle einer Gruppe von Codes, d. h. mehrerer quantisierter und codierter Spektralwerte, für die quantisierten Spektralkoeffizienten sind erhebliche Dateneinsparungen möglich. Es ist offensichtlich, daß die erreichbaren Datenrateneinsparungen vom Signal abhängen. Handelt es sich z. B. um ein Signal mit sehr wenigen Rauschanteilen, d. h. sehr wenigen rauschhaften Gruppen, oder mit transienten Eigenschaften, so wird eine geringere Datenrateneinsparung möglich sein, als wenn ein sehr verrauschtes Signal mit sehr vielen rauschhaften Gruppen codiert wird.

Der eingangs beschriebene Standard MPEG-2 Advanced Audio Coding (AAC) unterstützt die Möglichkeit der Rauschsubstitution nicht. Die erheblichen Datenrateneinsparungen sind mit dem bisherigen Standard daher nicht möglich.

Die Aufgabe der vorliegenden Erfindung besteht darin, den bestehenden Standard MPEG-2 AAC um die Möglichkeiten der Rauschsubstitution derart zu erweitern, daß weder die grundsätzliche Codiererstruktur noch die Struktur der vorhandenen Bitstromsyntax angetastet wird.

Diese Aufgabe wird durch ein Verfahren zum Signalisieren einer Rauschsubstitution beim Codieren eines Audiosignals gemäß Anspruch 1, durch ein Verfahren zum Codieren eines Audiosignals gemäß Anspruch 10 und durch ein Verfahren zum Decodieren eines Audiosignals gemäß Anspruch 11 gelöst.

Der vorliegenden Erfindung liegt die Erkenntnis zugrunde, daß im Falle der Durchführung einer Rauschsubstitution für ein rauschhaftes Band keine Quantisierung und Redundanz-Codierung oder Huffman-Codierung von Spektralwerten durchgeführt werden braucht. Stattdessen werden, wie es bereits beschrieben wurde, im Decodierer Rausch-Spektralwerte für eine rauschhafte Gruppe erzeugt, deren Maß für die Energie dem Maß für die Energie der Rausch-substituierten Spektralwerte entspricht. In anderen Worten werden für rauschhafte Gruppen keine Codiertabellen verwendet, da keine Redundanz-Codierung stattfindet. Somit ist auch die Codiertabellennummer, d. h. der entsprechende Platz in der Bitstromsyntax des codierten Audiosignals, überflüssig. Dieser Platz der Bitstromsyntax, d. h. die Codiertabellennummer, kann nun gemäß der vorliegenden Erfindung dazu verwendet werden, anzuzeigen, daß eine Gruppe rauschhaft ist und einer Rauschsubstitution unterzogen wird. Da, wie es ebenfalls erwähnt wurde, lediglich 12 Codiertabellen vorgesehen werden, der Platz in der Bitstromsyntax jedoch 4 Bit beträgt, mit denen insgesamt ein Zahlenbereich von 0 - 15 binär dargestellt werden kann, existieren sog. zusätzliche Codiertabellennummern, die auf keine Codiertabelle verweisen. Lediglich die Codiertabellennummern 0 - 11 verweisen auf eine Codiertabelle. Bei einem bevorzugten Ausführungsbeispiel der vorliegenden Erfindung wird die Codiertabellennummer 13 verwendet, um dem Decodierer zu signalisieren, daß die Gruppe, die in ihren Seiteninformationen die Codiertabellennummer 13, d. h. die zusätzliche Codiertabellennummer, aufweist, eine rauschhafte Gruppe ist und einer Rauschsubstitution unterzogen worden ist. Für Fachleute ist es jedoch offensichtlich, daß auch die zusätzliche oder freie Codiertabellennummer 12, 14 oder 15 eingesetzt werden kann.

Wie es bereits weiter vorne dargestellt wurde, können die Spektralwerte, die nach einer Frequenzbereichstransformation des zeitlichen Audiosignals vorhanden sind, in Skalenfaktorbänder gruppiert werden, um eine optimale Maskierung des Quantisierungsrauschens zu erreichen. Bei dem Standard MPEG-2 AAC sind zusätzlich mehrere Skalenfaktorbänder in Abschnitte oder "Sections" gruppiert. Eine Section besteht daher zumeist aus mehreren Skalenfaktorbändern. Das heißt, daß eine Rauschsubstitution immer für eine ganze Section signalisiert wird, d. h. ob die Rauschsubstitution aktiv oder nicht aktiv ist. Aufgrund der Tatsache, daß die rauschhaften Skalenfaktorbänder nicht quantisiert werden, müssen auch keine Skalenfaktoren für dieselben berechnet oder übertragen bzw. codiert werden. Das heißt, daß zusätzlich zu der Codiertabellennummer, welche die Rauschsubstitution an sich anzeigt, eine weitere stelle im Bitstrom frei ist, welche anderweitig besetzt werden kann. Bei dem bevorzugten Ausführungsbeispiel der vorliegenden Erfindung wird an die Stelle, die für den Skalenfaktor in den Seiteninformationen zu einem Skalenfaktorband vorgesehen ist, ein Maß für die Energie der ersetzten Spektralkoeffizienten geschrieben. Wie es bereits erwähnt wurde, hängt die Wahrnehmung von Rauschsignalen primär von deren spektraler Zusammensetzung und nicht von deren tatsächlicher Wellenform ab. Aus den Spektralwerten eines rauschhaften Skalenfaktorbandes wird somit ein Maß für die Energie der Spektralwerte in dem rauschhaften Skalenfaktorband berechnet. Diese Größe wird anstelle des Skalenfaktorbandes in die Seiteninformationen eingetragen, ohne daß zusätzliche Seiteninformationen benötigt werden oder die Struktur der Bitstromsyntax verändert werden muß. Diese zu übertragende Größe kann entweder die Gesamtenergie der Spektralwerte in einem rauschhaften Skalenfaktorband sein oder die mittlere Energie, die beispielsweise auf einen Spektralwert oder eine Spektrallinie in dem Skalenfaktorband normiert ist. Bei dem bevorzugten Ausführungsbeispiel der vorliegenden Erfindung wird jedoch nicht die mittlere Energie sondern die Gesamtenergie als Maß für die Energie verwendet.

Für die Übertragung des Maßes für die Energie der ersetzten Spektralwerte wird vorzugsweise die gleiche Auflösung verwendet, wie sie zur inversen Skalierung der übertragenen spektralen Daten verwendet wird, d. h. eine logarithmische Skalierung mit einer Auflösung von 1,5 dB beim AAC-Standard. Ähnlich wie beim Layer-III-Verfahren wird beim AAC-Verfahren zur Rekonstruktion der nicht-rauschhaften, d. h. tonalen, Spektralanteile a) die inverse Kennlinie des nichtlinearen Quantisierers auf den quantisierten Wert (X) der Spektrallinie angewendet (Y = X^{4/3}), und dann b) eine "inverse Skalierung" entsprechend der übertragenen Skalenfaktoren durchgeführt (Z = Y x 2^{(SF/4)}), wobei SF der Skalenfaktor des jeweiligen Skalenfaktorbandes ist, und wobei Z den requantisierten Spektralwert darstellt. Die Auflösung beträgt somit 1,5 dB.

Bei dem Verfahren zum Signalisieren einer Rauschsubstitution beim Codieren eines Audiosignals gemäß der vorliegenden Erfindung, bei dem für ein rauschhaftes Skalenfaktorband kein Skalenfaktor benötigt wird, sondern stattdessen das Maß für die Energie der substituierten Spektralwerte eingesetzt wird, werden die selben Codiergesetze für das Maß für die Energie der substituierten Spektralwerte eingesetzt wie sie sonst beim Skalenfaktor zur Anwendung kommen würden. Dies stellt eine vorteilhafte Nutzung bereits vorhandener Resourcen im AAC-Codierer dar und erfordert keinerlei zusätzliche Seiteninformationen.

Eine weitere vorteilhafte Anwendung der Signalisierung der Rauschsubstitution ist bei Stereoaudiosignalen gegeben. Das menschliche Ohr ist in der Lage, eine Korrelation zwischen den Signalen bzw. Kanälen (L und R) eines Stereokanalpaars, welches bei AAC als "Channel Pair" bezeichnet wird, bis zu einem gewissen Grad wahrzunehmen. Daher sollte auch im Falle einer Rauschsubstitution die Korrelation zwischen den beiden ersetzten bzw. substituierten Rauschsignalen des Kanalpaars ähnlich zu der des Originalsignals sein. Skalenfaktorbänder im linken und im rechten Kanal, welche die gleiche Mittenfrequenz haben, können beide rauschsubstituiert werden, wenn eine Rauschhaftigkeit erkannt wird. Werden beide Kanäle rauschsubstituiert, und werden keine weiteren Vorkehrungen getroffen, so haben die im Codierer zufällig erzeugten Rausch-Spektralwerte zwar die gleiche Gesamtenergie wie im ursprünglichen Audiosignal, dieselben sind jedoch aufgrund des zufälligen Erzeugens völlig unkorreliert. Dies kann unter bestimmten Umständen zu hörbaren Fehlern führen. Um dies zu vermeiden ist es möglich, die selben zufällig erzeugten Rausch-Spektralwerte eines Skalenfaktorbandes für beide Kanäle zu verwenden, was einer vollständigen Korrelation der rauschhaften Skalenfaktorbänder des linken und rechten Kanals entspricht.

Dabei wird gemäß einem bevorzugten Ausführungsbeispiel der vorliegenden Erfindung folgendermaßen vorgegangen: Für jedes Kanalpaar existiert im AAC-Standard eine sog. Mitte/Seite-Maske (M/S-Maske), welche im Standard selbst als "ms_used" (= ms-verwendet) bezeichnet wird. Diese M/S-Maske ist ein Bitvektor, der bandweise anzeigt, ob zwischen den beiden Kanälen eine M/S-Stereocodierung angewendet worden ist, welche für Fachleute bekannt ist und einführend in J.D. Johnston, A.J. Ferreira: "Sum-Difference Stereo Transform Coding", IEEE ICASSP 1992, S. 569 - 571, und auch im MPEG-AAC-Standard beschrieben ist. Die M/S-Maske besteht aus einer Anzahl von Bits, wobei jedes Bit einem Skalenfaktorband zugeordnet ist. Wird in einem Skalenfaktorband eine M/S-Codierung verwendet, so wird ein Signalisierungsbit in der M/S-Maske in den Seiteninformationen gesetzt sein, das die M/S-Codierung dem Decodierer mitteilt. Wird jedoch ein rauschhaftes Skalenfaktorband im linken sowie im rechten Kanal für die gleiche Mittenfrequenz der Skalenfaktorbänder (für L und für R) erkannt, so findet selbstverständlich keine Mitte/Seite-Codierung statt. Das M/S-Bit für dieses Skalenfaktorband steht also ebenso wie die Codiertabellennummer und der Skalenfaktor in dem Bitstrom entsprechend der Bitstromsyntax zur Verfügung, um etwas anderes zu signalisieren. In diesem Fall kann das Bit der M/S-Maske für das rauschhafte Skalenfaktorband beider Kanäle verwendet werden, um anzuzeigen, ob für den linken und rechten Kanal unabhängige Rausch-Spektralwerte oder Rauschvektoren erzeugt werden sollen, was dem Normalfall entsprechen würde, oder ob der gleiche Rauschvektor für sowohl den linken als auch rechten Kanal in dem rauschhaften Skalenfaktorband verwendet werden soll.

Wie es für Fachleute bekannt ist, können bei nichtrauschhaften Skalenfaktorbändern die Skalenfaktoren mittels einer Differenzcodierung codiert werden. Für einen entsprechenden Skalenfaktor in einem folgenden Skalenfaktorband muß nicht wieder der gesamte Wert des Skalenfaktors codiert werden, sondern lediglich die Differenz desselben vom vorhergehenden. Dies wird als Differenzcodierung bezeichnet. Diese Differenzcodierung wird bei einem bevorzugten Ausführungsbeispiel der vorliegenden Erfindung ebenfalls zum Codieren des Maßes für die Energie der Spektralanteile in einem rauschhaften Skalenfaktorband verwendet. Damit muß für ein folgendes Skalenfaktorband nicht wieder das gesamte Maß der Energie sondern lediglich die Differenz des aktuellen vom vorhergehenden codiert werden, was wiederum zu Biteinsparungen Anlaß gibt. Selbstverständlich muß immer ein erster Ausgangswert vorhanden sein, der jedoch auch ein fester von vorneherein vorgegebener Wert sein kann. Dieses Verfahren der Differenzcodierung wird daher besonders vorteilhaft sein, wenn aufeinanderfolgende Skalenfaktorbände in Frames rauschhaft sind.

## Patentansprüche

1. Verfahren zum Signalisieren einer Rauschsubstitution beim Codieren eines Audiosignals, mit folgenden Schritten:
Transformieren eines zeitlichen Audiosignals in den Frequenzbereich, um Spektralwerte zu erhalten;
Gruppieren der Spektralwerte in Gruppen von Spektralwerten;
Erfassen, ob eine Gruppe von Spektralwerten eine rauschhafte Gruppe ist;
falls eine Gruppe nicht rauschhaft ist, Zuweisen einer Codiertabelle aus einer Mehrzahl von Codiertabellen zum Redundanzcodieren der nicht rauschhaften Gruppe, wobei mittels einer Codiertabellennummer auf die der Gruppe zugewiesene Codiertabelle verwiesen wird; und
falls eine Gruppe rauschhaft ist, Zuweisen einer zusätzlichen Codiertabellennummer, die nicht auf eine Codiertabelle verweist, zu dieser Gruppe, um zu signalisieren, daß diese Gruppe rauschhaft ist und daher nicht redundanz-codiert wird.

2. Verfahren nach Anspruch 1, bei dem die Gruppen von Spektralwerten Abschnitte sind, wobei eine Codiertabellennummer für nicht rauschhafte Abschnitte und eine zusätzlich Codiertabellennummer für rauschhafte Abschnitte vergeben werden.

3. Verfahren nach Anspruch 2,
bei dem ein Abschnitt eines oder mehrere Skalenfaktorbänder aufweist, wobei jedem Skalenfaktorband ein Skalenfaktor zugeordnet ist; und
bei dem im Falle eines rauschhaften Skalenfaktorbandes ein Maß für die Energie der Spektralwerte in dem rauschhaften Skalenfaktorband anstelle eines Skalenfaktors codiert wird.

4. Verfahren nach Anspruch 3, bei dem das Maß für die Energie der Spektralwerte in einer rauschhaften Gruppe die auf einen Referenzwert normierte mittlere Energie derselben in einem Skalenfaktorband ist.

5. Verfahren nach Anspruch 3, bei dem das Maß für die Energie die Gesamtenergie der Spektralwerte in dem rauschhaften Skalenfaktorband ist.

6. Verfahren nach Anspruch 3 oder 4, bei dem zum Codieren des Maßes für die Energie der rauschhaften Spektralwerte in dem Skalenfaktorband die selbe Skalierung verwendet wird, die üblicherweise zum Codieren eines Skalenfaktors eines Skalenfaktorbandes verwendet wird, das kein rauschhaftes Skalenfaktorband ist.

7. Verfahren nach einem der Ansprüche 3 - 6, bei dem die Codierung des Maßes für die Energie der Spektralwerte in rauschhaften Skalenfaktorbändern eine Differenzcodierung ist.

8. Verfahren nach einem der Ansprüche 1 - 7,
bei dem das Audiosignal ein Stereoaudiosignal ist,
bei dem eine Mitte/Seite-Codierung zweier Kanäle des Stereoaudiosignals durch eine Mitte/Seite-Maske gruppenweise anzeigbar ist, und
bei dem im Fall von frequenzmäßigen entsprechenden rauschhaften Gruppen beider Kanäle durch die Mitte/Seite-Maske anzeigbar ist, ob unterschiedliche oder gleiche Rausch-Spektralwerte für beide Kanäle beim Decodieren eines codierten Audiosignals zu verwenden sind.

9. Verfahren nach einem der vorhergehenden Ansprüche, bei dem das Erfassen, ob eine Gruppe von Spektralwerten eine rauschhafte Gruppe ist, mittels des zeitlichen Audiosignals oder mittels der Spektralwerte des zeitlichen Audiosignals oder mittels sowohl des zeitlichen Audiosignals als auch der Spektralwerte des zeitlichen Audiosignals durchgeführt wird.

10. Verfahren zum Codieren eines Audiosignals mit folgenden Schritten:
Signalisieren einer Rauschsubstitution nach einem der Ansprüche 1 - 9;
Berechnen eines Maßes für die Energie einer rauschhaften Gruppe;
Eintragen des Maßes für die Energie in der Gruppe zugeordnete Seiteninformationen;
Eintragen der zusätzlichen Codiertabellennummer in die der Gruppe zugeordneten Seiteninformationen;
Quantisieren der nichtrauschhaften Gruppen und Codieren der quantisierten nichtrauschhaften Gruppen unter Verwendung der Codiertabelle, auf die durch die Codiertabellennummer verwiesen wird, während für rauschhafte Gruppen keine Quantisierung oder Codierung stattfindet; und
Bilden eines Bitstroms, der quantisierte und codierte nichtrauschhafte Gruppen sowie für rauschhafte Gruppen ein Maß für die Energie der Spektralwerte der rauschhaften Gruppen und die zusätzliche Codiertabellennummer zur Signalisierung der rauschhaften Gruppen aufweist.

11. Verfahren zum Decodieren eines codierten Audiosignals mit folgenden Schritten:
Empfangen eines Bitstroms;
Redundanz-Decodieren von nichtrauschhaften Gruppen aufgrund einer durch eine Codiertabellennummer angezeigten Codiertabelle und Requantisieren von redundanz-decodierten, quantisierten Spektralwerte;
Erfassen einer rauschhaften Gruppe von Spektralwerten aufgrund einer zusätzlichen Codiertabellennummer, die einer solchen Gruppe zugeordnet ist;
Erfassen eines Maßes für die Energie der Spektralwerte in der rauschhaften Gruppe aufgrund von der Gruppe zugeordneten Seiteninformationen;
Erzeugen von Rausch-Spektralwerten für die rauschhafte Gruppe, wobei das Maß der Energie der Rausch-Spektralwerte in der rauschhaften Gruppe gleich dem Maß für die Energie von Spektralwerten der rauschhaften Gruppe in dem ursprünglichen Signal ist;
Transformieren der requantisierten Spektralwerte und der Rausch-Spektralwerte in den Zeitbereich, um ein decodiertes Audiosignal zu erhalten.

12. Verfahren gemäß Anspruch 11, bei dem das Erzeugen der Rausch-Spektralwerte durch Erzeugen von Zufallszahlen oder durch Erhalten derselben aus einer Tabelle stattfindet, wobei die addierte Energie der Rausch-Spektralwerte dem Maß der Energie der Spektralwerte der rauschhaften Gruppe des ursprünglichen Audiosignals entspricht.

13. Verfahren nach Anspruch 11 oder 12, das ferner folgende Schritte aufweist:
Erfassen einer Mitte/Seite-Maske für Stereoaudiosignale;
aufgrund der Mitte/Seite-Maske für Stereoaudiosignale, Verwenden identischer Rausch-Spektralwerte für entsprechende rauschhafte Gruppen beider Kanäle, oder Erzeugen zweier unabhängiger Gruppen von Rausch-Spektralwerten für bei Kanäle.

## Claims

1. A method for signalling a noise substitution when coding an audio signal, comprising the following steps:
transforming a time-domain audio signal into the frequency domain to obtain spectral values;
grouping the spectral values together to form groups of spectral values;
detecting whether a group of spectral values is a noisy group;
if a group is not noisy, allocating a codebook from a plurality of codebooks for the redundancy coding of the non-noisy group, the codebook allocated to the group being referred to by means of a codebook number; and
if a group is noisy, allocating an additional codebook number, which does not refer to a codebook, to this group to signal that this group is noisy and is therefore not redundancy coded.

2. A method according to claim 1, wherein the groups of spectral values are sections, one codebook number being allotted for non-noisy sections and an additional codebook number for noisy sections.

3. A method according to claim 2,
wherein a section comprises one or more scale factor bands, each scale factor band having a scale factor assigned to it; and
wherein in the case of a noisy scale factor band a measure of the energy of the spectral values in the noisy scale factor band is coded instead of a scale factor.

4. A method according to claim 3, wherein the measure of the energy of the spectral values in a noisy group is the mean energy of the same, normalized on a reference value, in a scale factor band.

5. A method according to claim 3, wherein the measure of the energy is the total energy of the spectral values in the noisy scale factor band.

6. A method according to claim 3 or 4, wherein the same scaling is used to code the measure of the energy of the noisy spectral values in the scale factor band as is normally used to code a scale factor of a scale factor band which is not a noisy scale factor band.

7. A method according to one of the claims 3 - 6, wherein the coding of the measure of the energy of the spectral values in noisy scale factor bands is a difference coding.

8. A method according to one of the claims 1 - 7,
wherein the audio signal is a stereo audio signal;
wherein a middle/side coding of the two channels of the stereo audio signal can be indicated group by group by a middle/side mask, and
wherein in the case of noisy groups of both channels having corresponding frequencies it can be indicated by the middle/side mask whether different or the same noise spectral values are to be used for both channels when decoding a coded audio signal.

9. A method according to one of the preceding claims, wherein detecting whether a group of spectral values is a noisy group is performed by means of the time-domain audio signal or by means of the spectral values of the time-domain audio signal or by means of both the time-domain audio signal and the spectral values of the time-domain audio signal.

10. A method for coding an audio signal, comprising the following steps:
signalling a noise substitution according to one of the claims 1 - 9;
calculating a measure of the energy of a noisy group;
entering the measure of the energy in the side information assigned to the group;
entering the additional codebook number in the side information assigned to the group;
quantizing the non-noisy groups and coding the quantized non-noisy groups using the codebook referred to by the codebook number, whereas no quantization or coding takes place for noisy groups; and
forming a bit stream which comprises quantized and coded non-noisy groups and, for noisy groups, a measure of the energy of the spectral values of the noisy groups and the additional codebook number for signalling the noisy groups.

11. A method for decoding a coded audio signal, comprising the following steps:
receiving a bit stream;
redundancy decoding non-noisy groups on the basis of a codebook indicated by a codebook number and requantizing redundancy-decoded, quantized spectral values;
identifying a noisy group of spectral values on the basis of an additional codebook number which is assigned to such a group;
establishing a measure of the energy of the spectral values in the noisy group on the basis of the side information assigned to the group;
generating noise spectral values for the noisy group, the measure of the energy of the noise spectral values in the noisy group being the same as the measure of the energy of the spectral values of the noisy group in the original signal; and
transforming the requantized spectral values and the noise spectral values into the time domain to obtain a decoded audio signal.

12. A method according to claim 11, wherein the noise spectral values are obtained by generating random numbers or by receiving the same from a table, the summed energy of the noise spectral values corresponding to the measure of the energy of the spectral values of the noisy group of the original audio signal.

13. A method according to claim 11 or 12, which includes the following further steps:
analysing a middle/side mask for stereo audio signals;
using either identical noise spectral values for corresponding noisy groups of the two channels or generating two independent groups of noise spectral values for the two channels, depending on the contents of the middle/side mask for stereo audio signals.

## Revendications

1. Procédé de signalisation d'une substitution de bruit lors du codage d'un signal audio, aux étapes suivantes consistant à :
transformer un signal audio dans le temps dans la plage de fréquences, pour obtenir des valeurs spectrales ;
regrouper les valeurs spectrales en groupes de valeurs spectrales ;
détecter si un groupe de valeurs spectrales est un groupe bruyant :
si un groupe n'est pas bruyant, attribuer un tableau de codage d'entre une pluralité de tableaux de codage pour le codage à redondance du groupe non bruyant, référence étant faite, à l'aide d'un numéro de tableau de codage, au tableau de codage attribué au groupe ; et
si un groupe est bruyant, attribuer à ce groupe un numéro de tableau de codage supplémentaire ne renvoyant pas à un tableau de codage, pour signaler que ce groupe est bruyant et n'est, de ce fait, pas codé avec redondance.

2. Procédé suivant la revendication 1, dans lequel les groupes de valeurs spectrales sont des segments, un numéro de tableau de codage étant attribué à des segments non-bruyants et un numéro de tableau de codage supplémentaire à des segments bruyants.

3. Procédé suivant la revendication 2,
dans lequel un segment présente une ou plusieurs bandes de facteurs d'échelle, à chaque bande de facteurs d'échelle étant associé un facteur d'échelle ; et
dans lequel, dans le cas d'une bande de facteurs d'échelle bruyante, il est codé une mesure de l'énergie des valeurs spectrales dans la bande de facteurs d'échelle bruyante, au lieu d'un facteur d'échelle.

4. Procédé suivant la revendication 3, dans lequel la mesure de l'énergie des valeurs spectrales dans un groupe bruyant est l'énergie centrale de celles-ci, normalisée à une valeur de référence, dans une bande de facteurs d'échelle.

5. Procédé suivant la revendication 3, dans lequel la mesure de l'énergie est l'énergie totale des valeurs spectrales dans la bande de facteurs d'échelle bruyante.

6. Procédé suivant la revendication 3 ou 4, dans lequel est utilisé, pour le codage de la mesure de l'énergie des valeurs spectrales bruyantes dans la bande de facteurs d'échelle, le même échelonnage qui est habituellement utilisé pour le codage d'un facteur d'échelle d'une bande de facteurs d'échelle qui n'est pas une bande de facteurs d'échelle bruyante.

7. Procédé suivant l'une des revendications 3 à 6, dans lequel le codage de la mesure de l'énergie des valeurs spectrales dans les bandes de facteurs d'échelle bruyantes est un codage de différence.

8. Procédé suivant l'une des revendications 1 à 7,
dans lequel le signal audio est un signal stéréophonique,
dans lequel un codage milieu/côté de deux canaux du signal stéréophonique peut être indiqué par groupe par un masque milieu/côté, et
dans lequel, dans le cas de groupes bruyants des deux canaux coïncidant en fréquence, il peut être indiqué par le masque milieu/côté s'il y a lieu, lors du décodage d'un signal audio codé, d'utiliser des valeurs spectrales de bruit différentes ou identiques.

9. Procédé suivant l'une des revendications précédentes, dans lequel la détection du fait qu'un groupe de valeurs spectrales est un groupe bruyant s'effectue à l'aide du signal audio dans le temps ou à l'aide des valeurs spectrales du signal audio dans le temps ou tant à l'aide du signal audio dans le temps qu'à l'aide des valeurs spectrales du signal audio dans le temps.

10. Procédé de codage d'un signal audio aux étapes suivantes consistant à :
signaler une substitution de bruit selon l'un des revendications 1 à 9 ;
calculer une mesure de l'énergie d'un groupe bruyant ;
entrer la mesure de l'énergie dans les informations latérales associées au groupe ;
entrer le numéro de tableau de codage supplémentaire dans les informations latérales associées au groupe ;
quantifier les groupes non-bruyants et coder les groupes non-bruyants quantifiés à l'aide du tableau de codage auquel se réfère le numéro de tableau de codage, tandis qu'il ne se produit pas de quantification ou de codage pour les groupes bruyants ; et
former un courant de bits présentant des groupes non-bruyants quantifiés et codés ainsi que, pour les groupes bruyants, une mesure de l'énergie des valeurs spectrales des groupes bruyants et le numéro de tableau de codage supplémentaire pour signaler les groupes bruyants.

11. Procédé de décodage d'un signal audio codé, aux étapes suivantes consistant à :
recevoir un courant de bits ;
décoder avec redondance les groupes non-bruyants sur base d'un tableau indiqué par un numéro de tableau de codage et requantifier les valeurs spectrales quantifiées et décodées avec redondance ;
détecter un groupe bruyant de valeurs spectrales sur base d'un numéro de tableau de codage supplémentaire associé à un tel groupe ;
détecter une mesure de l'énergie des valeurs spectrales dans le groupe bruyant sur base des informations latérales associées au groupe ;
générer des valeurs spectrales de bruit pour le groupe bruyant, la mesure de l'énergie des valeurs spectrales de bruit dans le groupe bruyant étant égale à la mesure de l'énergie des valeurs spectrales du groupe bruyant dans le signal original ;
transformer les valeurs spectrales requantifiées et les valeurs spectrales de bruit dans la plage de temps, pour obtenir un signal audio décodé.

12. Procédé suivant la revendication 11, dans lequel la génération des valeurs spectrales de bruit a lieu par génération de nombres arbitraires ou par l'obtention de ceux-ci à partir d'un tableau, l'énergie additionnée des valeurs spectrales de bruit correspondant à la mesure de l'énergie des valeurs spectrales du groupe bruyant du signal audio original.

13. Procédé suivant la revendication 11 ou 12, présentant, par ailleurs, les étapes suivantes consistant à :
détecter un masque milieu/côté pour les signaux stéréophoniques ;
sur base du masque milieu/côté pour les signaux stéréophoniques, utiliser des valeurs spectrales de bruit identiques pour des groupes bruyants correspondants des deux canaux, ou générer deux groupes indépendants de valeurs spectrales de bruit pour les deux canaux.
